# EUROPÄISCHE PATENTSCHRIFT

(11) **EP 2 745 510 B1**
(45) Veröffentlichungstag und Bekanntmachung des Hinweises auf die Patenterteilung: **31.10.2018**
(21) Anmeldenummer: 12750997.4
(22) Anmeldetag: 25.07.2012
(51) Int. Cl.: H04N 7/15, H04N 7/14, H04M 3/56

(54) **VERFAHREN ZUR BEHANDLUNG VON STÖRUNGEN BEI DER ÜBERTRAGUNG EINER ZEITLICHEN FOLGE DIGITALER BILDER**
METHOD FOR HANDLING TRANSMISSION ERRORS OF A VIDEO STREAM
PROCÉDÉ DE TRAITEMENT D'ERREURS DE TRANSMISSION D'UN FLUX VIDÉO

(43) Veröffentlichungstag der Anmeldung: 25.06.2014
(73) Patentinhaber: Unify GmbH & Co. KG, 80807 München (DE)
(72) Erfinder: SCHWARTZE, Jürgen, 58239 Schwerte (DE)
(74) Vertreter: Fritzsche, Thomas
(86) Internationale Anmeldenummer: PCT/EP2012/003147
(87) Internationale Veröffentlichungsnummer: WO 2014/015884

(56) Entgegenhaltungen:
- EP-A1- 0 897 638
- EP-A1- 1 763 242
- US-A1- 2006 221 083

## Beschreibung

Die vorliegende Erfindung betrifft ein Verfahren zur Behandlung von Störungen bei der Übertragung einer zeitlichen Folge digitaler Bilder.

Bei der Übertragung zeitlicher Folgen digitaler Bilder über einen Übertragungskanal, also beispielsweise bei der Übertragung von Videodaten über Telefonleitungen, Datenkommunikationsleitungen oder über eine Funkverbindung, beispielsweise in der Videotelefonie, werden Bilddaten in digitaler Form von einem Sender an einen oder mehrere Empfänger übertragen. Häufig, wie beispielsweise in der Videotelefonie, werden zusammen mit den Bilddaten auch Audiodaten übertragen. Die Audiodaten bestehen dann häufig hauptsächlich aus Sprachdaten, also aus digitalen Repräsentationen des von einer in den übertragenen Bildern gezeigten Person erzeugten Sprachsignals.

Aufgrund des Technologiewandels von der klassischen Telefonie zur Internet-Telefonie (auch als Voice over IP oder VoIP bezeichnet) gewinnen Mehrwertdienste, die einen erhöhten Bandbreitenbedarf zwischen den Kommunikationsteilnehmern erfordern, rasch an Bedeutung. Dabei kann es sich um Echtzeit-Dienste handeln (z.B. eine Audio-Übertragung mit hochqualitativen Codecs) bzw. Video-Telefonie, oder um parallel Kommunikationsmechanismen ohne Echtzeit-Anforderungen wie das sogenannte "Messaging" oder den sogenannten "Chat". Bei solchen Mehrwertdiensten können Probleme dadurch auftreten, dass die erhöhte Bandbreite zwischen den Kommunikationspartnern während der gesamten Kommunikationszeit zur Verfügung stehen muss. Diese Anforderung ist jedoch nicht immer zu gewährleisten, insbesondere nicht bei mobilen Kommunikationspartnern, die auf eine drahtlose Datenkommunikation angewiesen sind. So kann es beispielsweise während einer Zugfahrt passieren, dass zunächst eine ausreichende Bandbreite für eine Audio- und Video-Kommunikation zur Verfügung steht, während kurz darauf durch ein Nachlassen der Güte der Netzverbindung, die für die Durchführung der Audio- und Video-Kommunikation erforderliche Bandbreite vorübergehend nicht mehr zur Verfügung steht.

Um die durch die Eigenschaften des verwendeten Übertragungskanals charakterisierten Beschränkungen hinsichtlich der verfügbaren Bandbreite und der auftretenden Störungen zu berücksichtigen, werden die zu übertragenden Bilddaten und Sprachdaten regelmäßig "kodiert". Die sogenannte Kodierung bewirkt regelmäßig eine Reduktion des zu übertragenden Datenvolumens durch Irrelevanz-Reduktion und durch Redundanz-Reduktion. Um die von Redundanz (weitgehend) befreiten Nutzdaten gegen Fehler bei der Übertragung schützen zu können, wird regelmäßig eine gewisses Maß an Redundanz in Gestalt sogenannter Fehlerkorrektur-Codes wieder hinzugefügt.

Bei der Audioübertragung kann durch ein Umschalten auf hochkomprimierende Codecs dynamisch auf eine Verringerung der verfügbaren Bandbreite reagiert werden. Im Bereich der Videoübertragung ist dies jedoch aufgrund einer erheblichen Mindestbandbreite für brauchbare Bewegtbildübertragungen nur sehr eingeschränkt möglich. Fällt die verfügbare Bandbreite unter einen bestimmten Wert, wird die Bildübertragung heute üblicherweise eingestellt, und es wird - je nach der Realisierung im Kommunikationsendpunkt - entweder gar kein Bild mehr angezeigt oder es wird ein ggf. lokal vorhandenes Kontaktfoto angezeigt. Diese Vorgehensweise ist insbesondere im Fall von Videokonferenzen unbefriedigend, weil Teilnehmer mit zu geringer Bandbreite in diesen Fällen ohne Bildübertragung an der Konferenz teilnehmen, wodurch sie unzureichend wahrgenommen und zu Konferenzteilnehmern zweiter Klasse werden.

Abhilfe kann hier möglicherweise eine dynamisch von der verfügbaren Bandbreite abhängige Wahl der verwendeten Video-Codecs oder der Bildauflösung schaffen.

US 2006/0221083 A1 offenbart ein Verfahren für mobile oder stationäre Kommunikationsgeräte, bei dem ein Bild einer anrufenden Person durch einen Gesichtsanimationsalgorithmus animiert wird, da das Abspielen eines Videos von der anrufenden Person während eines eingehenden Anrufs mit sehr komplexen Prozessen verbunden ist und gespeicherte Videos in Echtzeit decodiert werden müssten. Hierdurch wird die erforderliche Rechenleistung und Speicherkapazität verringert.

WO 97/43857 A1 betrifft ein Verfahren zur Zuordnung eines Sprachsignals eines Teilnehmers einer Videokonferenz zu seinem Bild, bei dem in einem Endgerät ein Sprachsignal eines Teilnehmers empfangen wird, bei dem in dem Endgerät Bilder der Teilnehmer empfangen werden oder abgespeichert sind, bei dem zumindest das Bild des Teilnehmers mit Rederecht dargestellt wird, und bei dem das empfangene Sprachsignal in einer Sprechererkennung ausgewertet und das Bild des zugehörigen Teilnehmers dargestellt oder kenntlich gemacht wird.

EP 1 763 242 A1 offenbart ein Verfahren eines Video-Kommunikationsdienstes in einem Kommunikationsendgerät, bei dem ein vorgegebenes Bild von einem Sendeterminal gesendete abnormale Videodaten ersetzt.

Trotz dieser Maßnahmen ist ein störungsfreier Betrieb derartiger Übertragungssysteme nicht oder nicht immer zu erreichen. Der vorliegenden Erfindung liegt daher die Aufgabe zugrunde, das Verhalten von Übertragungssystemen für zeitliche Folgen digitaler Bilder im Hinblick auf mögliche auftretende Störungen nach Möglichkeit zu verbessern.

Zur Lösung dieser Aufgabe sieht die vorliegende Erfindung nach Anspruch 1 ein Verfahren zur Behandlung von Störungen bei der Übertragung einer zeitlichen Folge digitaler Bilder von einem Sender zu wenigstens einem Empfänger vor, bei dem die zu übertragenden Bilder wenigstens zeitweilig das Gesicht eines Sprechers zeigen, und bei dem mehrere Bilder der zeitlichen Folge, die aufgrund der Störung nicht oder nicht in zufrieden stellender Weise dekodiert werden können, auf der Seite des Empfängers durch eine Folge mehrerer synthetischer Bilder ersetzt werden. Die synthetischen Bilder wurden mit Hilfe von Lautdaten ausgewählt, die durch eine Lauterkennung aus digitalen Sprachdaten des Sprechers extrahiert wurden, wobei die digitalen Sprachdaten zusammen mit den digitalen Bilddaten übertragen wurden.

Weiterhin betrifft die Erfindung eine Kommunikationseinrichtung nach Anspruch 10 mit Mitteln zur Durchführung dieses Verfahrens von Anspruch 1.

Im Zusammenhang mit der Beschreibung der vorliegenden Erfindung ist unter einer zeitlichen Folge digitaler Bilder eine Folge I(1), I(2), ..., I(n-1), I(n), I(n+1), ... zu verstehen, in der jedes Element I(n) der Folge eine digitales Bild ist, wobei der Folgenindex n eine natürliche Zahl ist und eine zeitliche Ordnungsrelation definiert. Aufeinander folgende Bilder der Folge entsprechen also aufeinander folgenden Zeitpunkten. Jedes Element der Folge ist ein digitales Bild, also eine Datenstruktur, die einer zweidimensionalen Anordnung einer Mehrzahl digitaler Bildwerte, die auch als Pixel bezeichnet werden, entspricht oder die in eine solche zweidimensionalen Anordnung digitaler Bildwerte umgewandelt oder durch eine solche zweidimensionalen Anordnung digitaler Bildwerte wenigstens näherungsweise repräsentiert werden kann.

In kodierter Form nehmen solche zeitlichen Folgen digitaler Bilder häufig eine andere Gestalt an. Um das zu übertragende Datenvolumen zu reduzieren, werden häufig nicht die Elemente einer Bildfolge einzeln kodiert, sondern es werden sogenannte Prädiktionsverfahren eingesetzt, welche aus vorhergehenden und/oder nachfolgenden Bildern einer zeitlichen Folge digitaler Bilder Zwischenbilder berechnen, die ein oft erheblich geringeres Datenvolumen haben als einzeln kodierte Bilder, und aus denen ein Empfänger mit Hilfe einer Dekodierung wieder eine Folge einzelner Bilder berechnen kann. Alle diese möglichen Formen kodierter, nicht kodierter oder dekodierter Bildfolgen sollen in dem hier vorliegenden Zusammenhang unter dem Begriff der zeitlichen Folge digitaler Bilder verstanden werden.

In diesem Zusammenhang ist unter der Übertragung einer zeitlichen Folge digitaler Bilder jedes Verfahren zu verstehen, bei dem eine zeitliche Folge digitaler Bilder von einem Sender an wenigstens einen Empfänger übertragen wird. Wichtige Beispiele für solche Übertragungen sind Videotelefonie, Videostreaming, digitales Fernsehen und ähnliche Verfahren. Die Übertragung einer zeitlichen Folge digitaler Bilder wird in diesem Zusammenhang auch als Videoübertragung bezeichnet.

In diesem Zusammenhang ist unter einem Sender einer zeitlichen Folge digitaler Bilder jede Einrichtung zu verstehen, die den Ausgangspunkt einer Übertragung einer zeitlichen Folge digitaler Bilder bildet. Wichtige Beispiele für solche Sender sind Bildtelefone, Videokameras oder sogenannte Smart-Phones mit einem Zugang zu einem Übertragungskanal zur Übertragung zeitlicher Folgen digitaler Bilder, also beispielsweise mit einem Zugang zu einem Telefonnetzwerk, einem Internetzugang oder mit einem Zugang zu einem (drahtlosen) Computernetzwerk.

In diesem Zusammenhang ist unter einem Empfänger einer zeitlichen Folge digitaler Bilder jede Einrichtung zu verstehen, die den Endpunkt einer Übertragung einer zeitlichen Folge digitaler Bilder bildet. Wichtige Beispiele für solche Empfänger sind Bildtelefone, Computerbildschirme oder sogenannte Smart-Phones mit einem Zugang zu einem Übertragungskanal zur Übertragung zeitlicher Folgen digitaler Bilder, also beispielsweise mit einem Zugang zu einem Telefonnetzwerk, einem Internetzugang oder mit einem Zugang zu einem (drahtlosen) Computernetzwerk.

In diesem Zusammenhang ist unter einer zeitlichen Folge digitaler Bilder, die wenigstens zeitweilig das Gesicht eines Sprechers zeigt, eine Bildfolge zu verstehen, in der eine Mehrzahl aufeinander folgender Bilder das Gesicht eines Menschen oder Teile eines Gesichts eines Menschen, vorzugsweise unter anderem oder wenigstens die Mundpartie des Gesichts, zeigen von dem Sprachsignale ausgehen, die als digitale Sprachdaten zusammen mit der zeitlichen Folge digitaler Bilder übertragen werden. Solche Bildfolgen und die zugehörigen Sprachdaten werden beispielsweise in der Videotelefonie häufig übertragen.

In diesem Zusammenhang ist unter einer Störung, insbesondere unter einer Störung bei der Übertragung einer zeitlichen Folge digitaler Bilder ein Vorgang oder ein Ereignis zu verstehen, der bzw. das die Übertragung und/oder die Wiedergabe übertragener Bilddaten, insbesondere zeitlicher Folgen digitaler Bilder ungünstig beeinflusst. Beispiele solcher Störungen sind Datenverluste oder Übertragungsfehler. Solche Störungen können durch eine zeitweilige Verringerung der verfügbaren Bandbreite verursacht sein, die deshalb ihrerseits als eine Störung in diesem Sinne aufgefasst werden kann. Ein weiteres Beispiel für solche Störungen sind die in der Mobilkommunikation auftretenden Störungen, bei denen ein in Bewegung befindlicher Empfänger (z.B. in einem fahrenden Auto oder während einer Zugfahrt) sich zwischen verschiedenen Funkzellen bewegt und dadurch einer kontinuierlich schwankenden Verbindungsqualität unterworfen ist.

In diesem Zusammenhang ist unter einer Dekodierung jeder Vorgang zu verstehen, der aus einer kodierten Bildfolge die ursprüngliche Bildfolge wieder herstellt. Ein wichtiges Beispiel für ein Video-Dekodierverfahren ist das Verfahren nach dem MPEG-4 Standard.

In diesem Zusammenhang ist unter einem synthetischen Bild ein digitales Bild zu verstehen, das nicht oder nicht ausschließlich durch eine Dekodierung einer übertragenen kodierten zeitlichen Folge digitaler Bilder ermittelt wurde, sondern das unter Zuhilfenahme weiterer Daten, insbesondere von Sprachdaten aus wenigstens einem dekodierten Bild oder aus einer kodierten zeitlichen Folge digitaler Bilder ermittelt wurde, um wenigstens ein digitales Bild zu ersetzen, das in Folge einer Störung nicht oder nicht in zufriedenstellender Qualität ohne eine solche Zuhilfenahme weiterer Daten ermittelt werden konnte. Eine zeitliche Folge synthetischer Bilder wird in diesem Zusammenhang auch als Bewegtbildsimulation bezeichnet.

In diesem Zusammenhang soll eine Ausdrucksweise, nach der digitale Sprachdaten "zusammen mit" digitalen Bilddaten übertragen werden oder wurden auch solche Fälle umfassen, in denen Sprach- und Bilddaten zeitgleich aber auf unterschiedlichen Wegen transportiert werden.

Vorzugsweise ist vorgesehen, bei vorübergehend oder dauerhaft unzureichender verfügbarer Bandbreite für Videoübertragungen eine Bewegbildsimulation für den Gesprächspartner (Empfänger) auf der Grundlage einer Echtzeit-Lautanalyse der Sprachverbindung zu generieren. Diese Bewegtbildsimulation wird vorzugsweise solange angezeigt, bis wieder eine ausreichende Bandbreite für eine Videoübertragung zur Verfügung steht. Dazu ist vorzugsweise eine kontinuierliche Bandbreitenüberwachung für die Kommunikationsverbindung, die zur Videoübertragung genutzt wird, erforderlich. Sobald die Bandbreite für die gewählte Anwendung, vorzugsweise für die Videotelefonie, nicht mehr ausreicht, wird die erfindungsgemäße Bewegbildsimulation, also die Ersetzung fehlender übertragener Bilder durch synthetische Bilder, verwendet, indem vorzugsweise auf die Bewegbildsimulation umgeschaltet wird.

Vorzugsweise beruht die erfindungsgemäße Bewegtbildsimulation auf wenigstens einem digitalen Bild des Sprechers bzw. seines Gesichts, das vorzugsweise beim Empfänger gespeichert ist. Hierbei handelt es sich vorzugsweise um ein Bild, das zu Zeitpunkten übertragen wurde, zu denen die Bandbreite noch ausreichend war. Es kann sich aber auch um ein sogenanntes Snapshot der aktuellen Kommunikationsverbindung, ein vorab übertragenes Standbild oder um eine Mehrzahl von vorab übertragenen Standbildern des Sprechers handeln. Alternativ kann es sich auch um ein bereits beim Empfänger vorhandenes Kontaktfoto handeln, welches über Messaging-Dienste oder über sogenannte soziale Netzwerke bezogen werden kann.

Aus derartigen beim Empfänger vorhandenen Bildern oder aus einem derartigen beim Empfänger vorhandenen Bild wird vorzugsweise eine zeitliche Folge abgewandelter, synthetischer Bilder berechnet, welche vorzugsweise die typischen Gesichtszüge bei der Aussprache einzelner Laute nachbilden oder nachmodellieren. Vorzugsweise wird dazu zunächst das Standbild oder werden die anderen als Grundlage für die Ermittlung der synthetischen Bilder dienenden Bilder analysiert, d.h. es werden vorzugsweise geeignete oder notwendige Fixpunkte wie z.B. Augen, Brauen, Nase, Mund, Lippen, u.ä. lokalisiert. Vorzugsweise wird für jeden aus den Sprachdaten extrahierten Laut ein synthetisches Bild berechnet.

Es wird vorzugsweise schritthaltend mit der Sprachverbindung, vorzugsweise unter möglichst guter Einhaltung der Echtzeiterfordernisse, eine Lautanalyse (oder auch Lautdatenextraktion) des empfangenen oder übertragenen Audiostroms, d.h. des Datenstroms der Sprachdaten vorgenommen. Hierzu kann eine Transcodierung der Audiodaten in ein lautgetreues Audioformat (lautgetreuer Codec) erforderlich oder dienlich sein. Vorzugsweise wird dann ein einem extrahierten Laut entsprechendes synthetisches Bild oder eine zeitliche Folge von einem extrahierten Laut oder einer extrahierten Lautfolge entsprechenden synthetischen Bildern zur Wiedergabe beim Empfänger verwendet, bis ein darauffolgender Laut oder eine darauffolgende extrahierte Lautfolge erkannt wurde. Dabei werden zur Qualitätsverbesserung vorzugsweise noch zusätzliche Übergangsbilder aus zwei Lautbildern berechnet. Auf der Empfängerseite entsteht so der Eindruck, als würde das Videobild des Kommunikationspartners (d.h. des Sprechers) synchron zur bestehenden Sprachverbindung vorzugsweise störungsfrei oder störungsarm übertragen, obwohl diese Übertragung eigentlich gestört ist, u.U. derart gestört, dass eine Wiedergabe tatsächlich übertragener Videobilder während dieser Zeiten eigentlich nicht möglich wäre.

Auf diese Weise werden durch die erfindungsgemäßen Maßnahmen Probleme gelöst, die insbesondere aus dem Medienbruch (z.B. ein Bildausfall) bei schwankender Übertragungsbandbreite bei der Videotelefonie auftreten können. Die Wahrnehmung bei weiteren Kommunikationsteilnehmern, insbesondere bei Videokonferenzen, wird entscheiden verbessert.

Vorzugsweise werden Lautbilddarstellungen während eines echten Videotelefonats - anstatt sie zu berechnen - mitgeschnitten und in Situationen wieder abgespielt, in denen der gerade keine ausreichende Bandbreite zur Verfügung steht, insbesondere in denen der Sprecher gerade keine ausreichende Bandbreite hat. Lautbilddarstellungen können vorzugsweise auch von Konferenzteilnehmern selbst hergestellt werden, beispielsweise unter Zuhilfenahme einer geeigneten Software-Applikation, und zum Download für Kontakte bereitgestellt werden. Das erfindungsgemäße Verfahren kann wahlweise in jedem Kommunikationsendpunkt angewandt werden, der die damit verbundenen Leistungsmerkmale nutzen möchte, oder zentral in einem Videokonferenzserver, der die einzelnen Videoströme und Bewegtbildsimulationen zu einem einzelnen Videostrom aggregiert.

In diesem Zusammenhang ist unter Sprachdaten ein die Video-Übertragung begleitender Datenstrom von digitalen Audiodaten zu verstehen. Diese Audiodaten werden üblicherweise in kodierter Form übertragen, um die zu ihrer Übertragung benötigten Bandbreite so gering wie möglich zu halten.

In diesem Zusammenhang ist unter Lautdaten eine vorzugsweise symbolische Folge digitaler Daten zu verstehen, wobei jedes Folgenelement oder Symbol vorzugsweise einen Laut, also ein Phonem oder eine Lautkette bezeichnet. Teilfolgen solcher Lautdatenfolgen bezeichnen vorzugsweise Lautketten. Vorzugsweise werden die Laute oder Lautketten mit Hilfe eines phonetischen Alphabets charakterisiert, beispielsweise mit Hilfe des Internationalen Phonetischen Alphabets IPA (Seite "Internationales Phonetisches Alphabet". In: Wikipedia, Die freie Enzyklopädie. Bearbeitungsstand: 16. Juni 2012, 20:28 UTC. URL: http://de.wikipedia.org/w/index.php?title=Internationales_Phonetisches_Alphabet&oldid=104470080 (Abgerufen: 2. Juli 2012, 19:37 UTC)), oder mit Hilfe von SAMPA, einer Teilmenge des IPA, bei der 7-Bit-ASCII-Zeichen verwendet werden.

In diesem Zusammenhang ist unter einer Lauterkennung oder unter einer Lautdatenextraktion ein Verfahren zur Gewinnung von Lautdaten aus Sprachdaten zu verstehen. Ein Beispiel für ein derartiges Verfahren ist in der Veröffentlichung von Harald Finster und Jürgen W. Meyer (1990), "Automatische Lauterkennung aus fließendem Text mit Hilfe mehrschichtiger Neuronaler Netze" beschrieben in ASST'90, 7. Aachener Symposium für Signaltheorie: Modellgestützte Signalverarbeitung, (ASST'90), Walter Ameling (Ed.). Springer-Verlag, London, UK, 299-304. Eine einführende Übersicht über den aktuellen Stand der Spracherkennung findet sich auf der Seite "Spracherkennung" in Wikipedia, Die freie Enzyklopädie. Bearbeitungsstand: 20. Juni 2012, 09:35 UTC. URL: http://de.wikipedia.org/w/index.php?title=Spracherkennung&oldid=104595052 (Abgerufen: 2. Juli 2012, 19:48 UTC).

Die Ausdrucksweise "wird oder wurde" oder ähnliche Ausdrucksweisen sollen in dem hier vorliegenden Zusammenhang bedeuten, dass der betreffende Vorgang oder Verfahrensschritt je nach der gewählten Ausführungsform der Erfindung entweder unter Echtzeitbedingungen während der Übertragung der betroffenen Daten ausgeführt wird oder zu einem vor der Übertragung der betroffenen Daten liegenden Zeitpunkt durchgeführt wurde. So können insbesondere die Lautdaten oder die synthetischen Bilder insbesondere in Echtzeit während der Übertragung der Bildfolgen erzeugt werden, oder die Lautdaten oder die synthetischen Bilder können vorab erzeugt worden und ggf. auch vorab an einen Empfänger übertragen worden sein.

Vorzugsweise ist ein Verfahren vorgesehen, bei dem die Störung der Übertragung durch eine zeitweilige Verminderung der verfügbaren Datenrate verursacht wird oder wurde. Die zeitweilige Verminderung der verfügbaren Datenrate ist also eine wichtige mögliche Ursache für eine Störung der Übertragung im hier betrachteten Sinn aber nicht die einzige mögliche Ursache. Weitere mögliche Ursachen sind Übertragungsfehler durch äußere Störeinflüsse wie beispielsweise elektromagnetische Störfelder oder ungünstige Ausbreitungsbedingungen für elektromagnetische Wellen.

In diesem Zusammenhang ist unter einer verfügbaren Datenrate bzw. unter einer verfügbaren Bandbreite diejenige Datenrate bzw. Bandbreite zu verstehen, die einer Kommunikationsverbindung bei einem gegebenen Übertragungskanal, den diese Kommunikationsverbindung sich ggf. mit weiteren Kommunikationsverbindungen teilen muss, zur Verfügung steht. Vorzugsweise ist ein Verfahren vorgesehen, bei dem wenigstens ein synthetisches Bild auf der Seite des Empfängers, vorzugsweise während oder vor der Übertragung der Videodaten, ausgewählt oder erzeugt wird oder wurde.

Die Ausdrucksweise "auf der Seite des Empfängers" soll in dem hier vorliegenden Zusammenhang bedeuten, dass die betroffenen Vorgänge bzw. Einrichtungen am Ende der Übertragungsstrecke zwischen dem Sender und dem Empfänger ablaufen bzw. vorgesehen sind.

Vorzugsweise ist ein Verfahren vorgesehen, bei dem wenigstens ein synthetisches Bild während der Übertragung erzeugt wird. Auf diese Weise wird es möglich, dieses synthetische Bild ohne vorbereitende Maßnahmen zur Verfügung zu stellen. Die Ausdrucksweisen "während der Übertragung" bzw. "auf dem Übertragungsweg" oder "auf dem Weg zu einem Empfänger" oder "auf dem Übertragungsweg zwischen dem Sender und einem Empfänger" sollen in dem hier vorliegenden Zusammenhang bedeuten, dass die damit verbundenen Vorgänge in Echtzeit bzw. nach dem Versenden durch den Sender und vor dem Empfangen durch den Empfänger ablaufen.

Vorzugsweise ist ein Verfahren vorgesehen, bei dem Lautdaten auf der Seite des Empfängers während der Übertragung aus den Sprachdaten extrahiert werden.

Vorzugsweise ist ein Verfahren vorgesehen, bei dem auf der Seite des Empfängers, vorzugsweise während oder vor der Übertragung der Videodaten, eine Bibliothek von synthetischen Bildern wenigstens eines Sprechers angelegt wird oder wurde.

In diesem Zusammenhang ist unter einer Bibliothek von synthetischen Bildern eine Mehrzahl von synthetischen Bildern zu verstehen, die in einer Einrichtung zur Speicherung von digitalen Bilddaten gespeichert werden oder wurden. Vorzugsweise existiert zwischen Bildern einer solchen Bibliothek und möglichen Lauten, die durch eine Lautdatenextraktion aus den Sprachdaten eines Sprechers extrahiert werden können, eine Zuordnung, mit deren Hilfe wenigstens ein zu einem Laut passendes synthetisches Bild in der Bibliothek ermittelt werden kann. Die Bilder einer solchen Bibliothek können in einer ersten Phase der Übertragung der Videodaten durch eine Einrichtung zur Erzeugung synthetischer Bilder erzeugt und in der Bibliothek gespeichert werden, um in einer zweiten Phase der Übertragung der Videodaten durch eine Einrichtung zur Auswahl synthetischer Bilder in Abhängigkeit von den extrahierten Lautdaten ausgewählt und anstelle der ursprünglichen Bilder übertragen zu werden.

Vorzugsweise ist ein Verfahren vorgesehen, bei dem wenigstens ein synthetisches Bild auf dem Übertragungsweg zwischen dem Sender und einem Empfänger, vorzugsweise während oder vor der Übertragung der Videodaten, erzeugt wird oder wurde. Auf diese Weise ist es möglich, die Erfindung im Zusammenhang mit Sendern und/oder Empfängern anzuwenden, die nicht erfindungsspezifisch ausgerüstet sein müssen.

Vorzugsweise ist ein Verfahren vorgesehen, bei dem Lautdaten auf dem Übertragungsweg zwischen dem Sender und einem Empfänger während der Übertragung aus den Sprachdaten extrahiert werden. Auf diese Weise ist es möglich, die Erfindung im Zusammenhang mit Sendern und/oder Empfängern anzuwenden, die nicht erfindungsspezifisch ausgerüstet sein müssen.

Vorzugsweise ist ein Verfahren vorgesehen, bei dem auf dem Übertragungsweg zwischen dem Sender und einem Empfänger, vorzugsweise während oder vor der Übertragung der Videodaten, eine Bibliothek von synthetischen Bildern wenigstens eines Sprechers angelegt wird oder wurde. Auf diese Weise ist es möglich, die Erfindung im Zusammenhang mit Sendern und/oder Empfängern anzuwenden, die nicht erfindungsspezifisch ausgerüstet sein müssen. Außerdem müssen nicht auf mehreren Endgeräten Bibliotheken angelegt und gespeichert werden.

Erfindungsgemäß ist eine Kommunikationseinrichtung mit Mitteln zur Durchführung eines erfindungsgemäßen Verfahrens, vorzugsweise nach einem der hier beschriebenen Ausführungsbeispiele.

Im Folgenden wird die Erfindung anhand bevorzugter Ausführungsbeispiele und mit Hilfe von Figuren näher beschrieben.

Dabei zeigt
- Fig. 1: in schematischer Weise ein erstes bevorzugtes Ausführungsbeispiel der Erfindung,
- Fig. 2: in schematischer Weise ein zweites bevorzugtes Ausführungsbeispiel der Erfindung und
- Fig. 3: in schematischer Weise ein drittes bevorzugtes Ausführungsbeispiel der Erfindung.

Das erfindungsgemäße Verfahren dient der Behandlung von Störungen bei der Übertragung einer zeitlichen Folge digitaler Bilder I von einem Sender S zu wenigstens einem Empfänger R.

Dabei zeigen die zu übertragenden Bilder wenigstens zeitweilig das Gesicht eines Sprechers. Ein Bild oder mehrere Bilder der zeitlichen Folge, das bzw. die aufgrund der Störung nicht oder nicht in zufrieden stellender Weise dekodiert werden können, werden auf der Seite des Empfängers oder auf dem Weg zu einem Empfänger durch ein synthetisches Bild P oder durch mehrere synthetische Bilder ersetzt. Diese synthetischen Bilder werden oder wurden mit Hilfe von Lautdaten LD ausgewählt oder erzeugt, die durch eine Lauterkennung oder Lautextraktion aus digitalen Sprachdaten SD des Sprechers extrahiert werden oder wurden, wobei die digitalen Sprachdaten zusammen mit den digitalen Bilddaten I übertragen werden oder wurden.

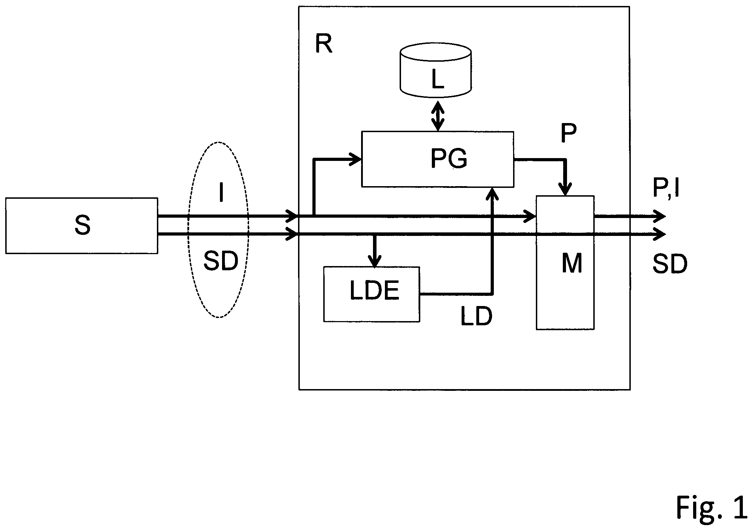

Bei dem in Fig. 1 gezeigten Ausführungsbeispiel der Erfindung überträgt ein Sender S Bilddaten I zusammen mit Sprachdaten SD an einen Empfänger R. Insbesondere im Fall der Videotelefonie zeigen die Bewegtbilder I (auch Videostrom genannt) einen Sprecher, dessen Sprachsignale durch ein Mikrofon aufgezeichnet, digitalisiert und vorzugsweise kodiert in Form der Sprachdaten SD übertragen werden.

Tritt nun eine Störung der Übertragung insbesondere durch eine zeitweilige Verminderung der verfügbaren Datenrate oder Bandbreite auf, dann werden die oder einige Bilder der Bildfolge I durch synthetische Bilder P ersetzt. Am Ausgang des Empfänger ist hierzu ein Mischer M in dem Empfänger R vorgesehen, der anstelle der ursprünglichen Bildfolge I eine gemischte Bildfolge P,I ausgibt, in der einzelne oder mehrere der ursprünglichen Bilder I durch synthetische Bilder P ersetzt wurden. Die Sprachdaten werden vorzugsweise unverändert ausgegeben.

In dem in Fig. 1 gezeigten Ausführungsbeispiel der Erfindung werden die synthetischen Bilder P auf der Seite des Empfängers R erzeugt oder ausgewählt. Dazu ist eine Einrichtung PG zur Erzeugung oder Auswahl synthetischer Bilder in dem Empfänger R vorgesehen, welche die synthetischen Bilder P in Abhängigkeit von den Lautdaten auswählt oder erzeugt. Im Fall der Auswahl synthetischer Bilder durch die Einrichtung PG sind in dem Empfänger eine Mehrzahl von synthetischen Bildern P gespeichert, aus denen die Einrichtung PG die synthetischen Bilder P in Abhängigkeit von den Lautdaten auswählt. Diese Mehrzahl von synthetischen Bildern P wurde vorzugsweise zu früheren Zeitpunkten durch die Einrichtung PG erzeugt oder durch den Empfänger R empfangen. Die Übertragung der synthetischen Bilder P in den Empfänger kann über dieselbe Kommunikationsverbindung erfolgt sein, über die später die Videoübertragung erfolgt; sie kann aber auch über eine andere Kommunikationsverbindung erfolgt sein, beispielsweise über ein soziales Netzwerk, welches solche Bilder zur Verfügung stellt.

Dazu alternativ wird wenigstens ein synthetisches Bild P während der Übertragung der Bildfolge I durch die Einrichtung PG erzeugt. In jedem Fall findet die Erzeugung oder Auswahl der synthetischen Bilder in Abhängigkeit von den Lautdaten LD statt, da die synthetischen Bilder ja zu den Lautdaten passen sollen, die in den synthetischen Bildern gezeigten synthetischen Gesichtsdrücke des Sprechers also zu den zeitgleich wiedergegebenen Lauten der Sprachdaten des Sprechers passen sollen.

Die Lautdaten LD werden in Fig. 1 auf der Seite des Empfängers R vorzugsweise während der Übertragung aus den Sprachdaten SD extrahiert. Dazu findet eine Lautdatenextraktion LDE im Empfänger statt.

Vorzugsweise wird oder wurde während oder vor der Übertragung der Videodaten I auf der Seite des Empfängers R eine Bibliothek L von synthetischen Bildern P wenigstens eines Sprechers angelegt.

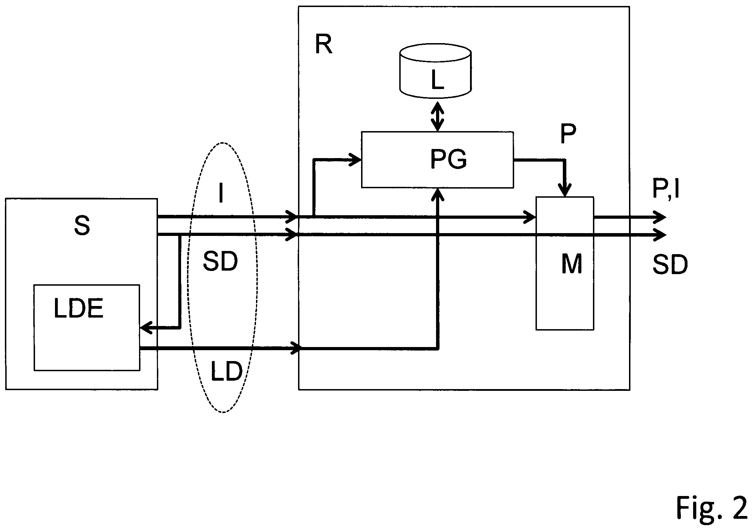

Bei dem in Fig. 2 gezeigten Ausführungsbeispiel der Erfindung findet die Lautdatenextraktion LDE im Sender S statt. Der Sender S überträgt daher die Lautdaten LD zusätzlich zu den Videodaten I und den Sprachdaten SD an den Empfänger R.

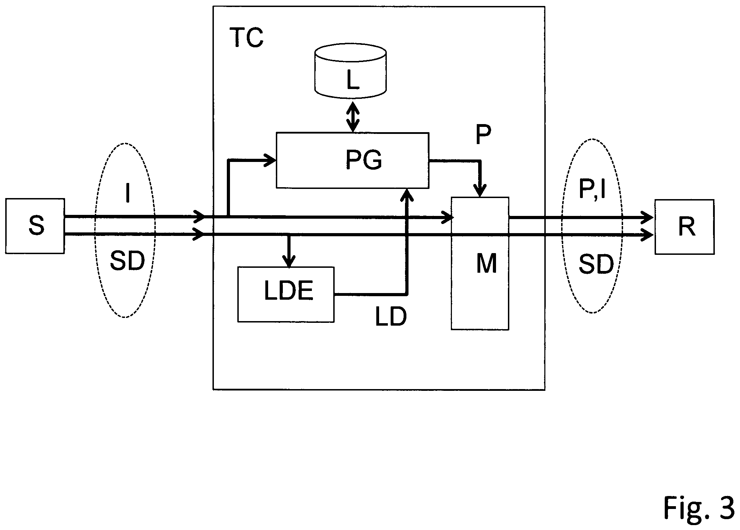

Bei dem in Fig. 3 gezeigten Ausführungsbeispiel der Erfindung wird oder wurde, vorzugsweise während oder vor der Übertragung der Videodaten I, wenigstens ein synthetisches Bild P auf dem Übertragungsweg TC zwischen dem Sender S und einem Empfänger erzeugt oder ausgewählt. Daher sind in diesem Ausführungsbeispiel eine Einrichtung PG zur Erzeugung oder Auswahl synthetischer Bilder und eine Lautdatenextraktion LDE in einer Einrichtung TC des Übertragungsweges vom Sender S zum Empfänger R vorgesehen. Bei diesem Ausführungsbeispiel werden auch Lautdaten LD auf dem Übertragungsweg zwischen dem Sender und einem Empfänger während der Übertragung aus den Sprachdaten SD extrahiert.

Vorzugsweise wird oder wurde, vorzugsweise während oder vor der Übertragung der Videodaten I, auf dem Übertragungsweg zwischen dem Sender S und einem Empfänger R eine Bibliothek L von synthetischen Bildern wenigstens eines Sprechers angelegt.

Einzelne oder mehrere Merkmale hier beschriebener Ausführungsbeispiele der Erfindung können vom Fachmann in unterschiedlicher Weise miteinander kombiniert werden, um weitere Ausführungsbeispiele zu erhalten, die hier nicht erschöpfend beschrieben werden können.

### Bezugszeichenliste

- S: Sender
- R: Empfänger
- I: zu übertragende digitale Bilder
- P: synthetische Bilder
- SD: Sprachdaten
- LD: Lautdaten
- LDE: Extraktion von Lautdaten aus Sprachdaten
- PG: Erzeugung oder Auswahl synthetischer Bilder
- M: Mischer
- TC: Übertragungsweg, Übertragungseinrichtung
- L: Bibliothek

## Patentansprüche

1. Verfahren zur Behandlung von Störungen bei der Übertragung einer zeitlichen Folge digitaler Bilder (I) von einem Sender (S) zu wenigstens einem Empfänger (R), wobei die zu übertragenden Bilder wenigstens zeitweilig das Gesicht eines Sprechers zeigen, wobei Störungen bei der Übertragung einer zeitlichen Folge digitaler Bilder Datenverluste oder Übertragungsfehler sind, die auch durch die zeitweilige Verringerung der verfügbaren Bandbreite verursacht sein können, **dadurch gekennzeichnet,**
a) **dass** mehrere Bilder der zeitlichen Folge, die aufgrund der Störung nicht oder nicht in zufrieden stellender Weise dekodiert werden können, auf der Seite des Empfängers (R) oder auf dem Übertragungsweg (TC) zu einem Empfänger (R) durch eine Folge mehrerer synthetischer Bilder (P) ersetzt werden, die mit Hilfe von Lautdaten (LD) aus einer Bibliothek (L) von synthetischen Bildern (P) des wenigstens einen Sprechers ausgewählt werden,
b) wobei unter einer Bibliothek (L) von synthetischen Bildern (P) eine Mehrzahl von synthetischen Bildern (P) zu verstehen ist, die in einer Einrichtung (PG) zur Speicherung von digitalen Bilddaten (I) gespeichert werden,
c) wobei zwischen Bildern (P) einer solchen Bibliothek (L) und möglichen Lauten, die durch eine Lautdatenextraktion (LDE) aus den Sprachdaten (SD) eines Sprechers extrahiert werden können, eine Zuordnung existiert, mit deren Hilfe wenigstens ein zu einem Laut (LD) passendes synthetisches Bild (P) in der Bibliothek (L) ermittelt werden kann, und
d) wobei die Lautdaten (LD) durch eine Lauterkennung aus digitalen Sprachdaten (SD) des Sprechers extrahiert werden und die digitalen Sprachdaten zusammen mit den digitalen Bilddaten (I) übertragen werden,
e) **dass** dann, wenn nun eine Störung der Übertragung insbesondere durch eine zeitweilige Verminderung der verfügbaren Datenrate oder Bandbreite auftritt, die oder einige Bilder der Bildfolge (I) durch synthetische Bilder (P) ersetzt werden, wozu am Ausgang des Empfängers (R) hierzu ein Mischer (M) in dem Empfänger (R) vorgesehen ist, der anstelle der ursprünglichen Bildfolge (I) eine gemischte Bildfolge (P, I) ausgibt, in der einzelne oder mehrere der ursprünglichen Bilder (I) durch synthetische Bilder (P) ersetzt werden, wobei die Sprachdaten vorzugsweise unverändert ausgegeben werden, und
f) **dass** die Bilder einer solchen Bibliothek in einer ersten Phase der Übertragung der Videodaten durch eine Einrichtung (PG) zur Erzeugung synthetischer Bilder (P) erzeugt und in der Bibliothek (L) gespeichert werden, um im Falle einer Störung bei der Übertragung einer zeitlichen Folge digitaler Bilder in einer zweiten Phase der Übertragung der Videodaten (I) durch eine Einrichtung (PG) zur Auswahl synthetischer Bilder (P) in Abhängigkeit von den extrahierten Lautdaten (LD) ausgewählt und anstelle der ursprünglichen Bilder (I) übertragen zu werden.

2. Verfahren nach Anspruch 1, **dadurch gekennzeichnet, dass** die Störung der Übertragung durch eine zeitweilige Verminderung der verfügbaren Datenrate verursacht wird oder wurde.

3. Verfahren nach einem der vorhergehenden Ansprüche, **dadurch gekennzeichnet, dass** die Folge mehrerer synthetischer Bilder (P) auf der Seite des Empfängers (R) erzeugt wird oder wurde.

4. Verfahren nach einem der vorhergehenden Ansprüche, **dadurch gekennzeichnet, dass** die Folge mehrerer synthetischer Bilder (P) während der Übertragung erzeugt wird.

5. Verfahren nach einem der vorhergehenden Ansprüche, **dadurch gekennzeichnet, dass** Lautdaten (LD) auf der Seite des Empfängers (R) während der Übertragung aus den Sprachdaten (SD) extrahiert werden.

6. Verfahren nach einem der vorhergehenden Ansprüche, **dadurch gekennzeichnet, dass** auf der Seite des Empfängers (R) während oder vor der Übertragung der Videodaten die Bibliothek (L) von synthetischen Bildern (P) des wenigstens einen Sprechers angelegt wird oder wurde.

7. Verfahren nach einem der vorhergehenden Ansprüche, **dadurch gekennzeichnet, dass** die synthetischen Bilder (P) auf dem Übertragungsweg (TC) zwischen dem Sender (S) und einem Empfänger (R) erzeugt werden oder wurden.

8. Verfahren nach einem der vorhergehenden Ansprüche, **dadurch gekennzeichnet, dass** Lautdaten (LD) auf dem Übertragungsweg zwischen dem Sender und einem Empfänger während der Übertragung aus den Sprachdaten (SD) extrahiert werden.

9. Verfahren nach einem der vorhergehenden Ansprüche, **dadurch gekennzeichnet, dass** auf dem Übertragungsweg zwischen dem Sender und einem Empfänger eine Bibliothek von synthetischen Bildern wenigstens eines Sprechers angelegt wird oder wurde.

10. Kommunikationseinrichtung mit Mitteln zur Durchführung eines Verfahrens nach einem der vorhergehenden Ansprüche.

11. Kommunikationseinrichtung nach Anspruch 10 mit Mitteln (LDE) zur Extraktion von Lautdaten (LD) aus Sprachdaten (SD).

12. Kommunikationseinrichtung nach Anspruch 11 mit Mitteln (PG) zur Erzeugung synthetischer Bilder (P) aus Lautdaten (LD) und aus zu übertragenen oder empfangenen digitalen Bilddaten (I).

## Claims

1. Method for the handling of disturbances during the transfer of a chronological sequence of digital images (I) from one Transmitter (S) to at least one Receiver (R), wherein the images to be transferred at least intermittently show the face of a speaker, wherein disturbances during the transfer of a chronological sequence of digital images are losses of data or transfer errors, which can also be caused by temporary reduction of the available bandwidth, **characterized by the fact**,
a) that multiple images of the chronological sequence which cannot be decoded in a satisfactory manner, or at all, due to the disturbance on the side of the Receiver (R) or over the transmission channel (TC) to a Receiver (R), are replaced by a sequence of a plurality of synthetic images (P), which are selected using sound data (LD) from a library (L) of synthetic images (P) of the at least one Speaker,
b) wherein a plurality of synthetic images (P) is to be understood to mean a library (L) of synthetic images (P), which are stored in a device (PG) for the storage of digital image data (I),
c) wherein there is an assignment that exists amongst images (P) of such a library (L) and possible sounds, that can be extracted from a sound data extraction (LDE) of the speech data (SD) of a speaker, by means of which at least one synthetic image (P) that corresponds to a sound (LD) can be determined in the library (L), and
d) wherein the sound data (LD) are extracted through a sound recognition from digital speech data (SD) of the speaker and the digital speech data are transmitted together with the digital image data (I),
e) that then, when a disturbance of the transmission was now to occur, in particular by means of an intermittent reduction of the available data rate or bandwidth, the or some of the images of the image sequence (I) are replaced by synthetic images (P), for which at the output of the Receiver (R), a mixer (M) is provided for this purpose in the Receiver (R), which emits a mixed image sequence (P, I) in place of the original image sequence (I), in which individual or a plurality of the original images (I) are replaced by synthetic images (P), wherein the speech data are preferably emitted unchanged, and
f) that, in a first phase of the transmission of the video data, the images of such a library are created by a device (PG) for the creation of synthetic images (P) and are stored in the library (L), so as to in the case of a disturbance in the transmission of a chronological sequence of digital images, are selected in a second phase of the transmission of video data (I) by a device (PG) for the selection of digital images (P) subordinately to the extracted sound data (LD) and are transmitted instead of the original images (I).

2. Method according to Claim 1,
**characterized by the fact that** the disturbance of the transmission is or was caused by an intermittent reduction of the available data rate.

3. Method according to one of the preceding Claims,
**characterized by the fact that** the sequence of a plurality of synthetic images (P) is or was created on the side of the Receiver (R).

4. Method according to one of the preceding Claims,
**characterized by the fact that** the sequence of a plurality of synthetic images (P) is created during the transmission.

5. Method according to one of the preceding Claims,
**characterized by the fact that** the sound data (LD) are extracted from the speech data (SD) on the side of the Receiver (R) during the transmission.

6. Method according to one of the preceding Claims,
**characterized by the fact that** on the side of the Receiver (R), either during or before the transmission of the video data, the library (L) of synthetic images (P) of the at least one speaker is or was applied.

7. Method according to one of the preceding Claims,
**characterized by the fact that** the synthetic images (P) are or were created on the transmission path (TC) between the Transmitter (S) and a Receiver (R).

8. Method according to one of the preceding Claims,
**characterized by the fact that** sound data (LD) are extracted from the speech data (SD) on the transmission channel between the Transmitter and a Receiver during the transmission.

9. Method according to one of the preceding Claims,
**characterized by the fact that** a library of synthetic images of at least one speaker is or was applied on the transmission path between the Transmitter and a Receiver.

10. Communication device with measures for the carrying out of a method according to one of the preceding Claims.

11. Communication device according to Claim 10 with measures (LDE) for the extraction of sound data (LD) from speech data (SD) .

12. Communication device according to Claim 11 with measures (PG) for the creation of synthetic images (P) from sound data (LD) and from digital image data (I) that are to be transmitted or received.

## Revendications

1. Procédé de traitement de perturbations lors de la transmission d'une série temporelle d'images numériques (I) d'un émetteur (S) à au moins un récepteur (R), dans lequel les images à transmettre montrent au moins temporairement le visage d'un locuteur, dans lequel des perturbations lors de la transmission d'une série temporelle d'images numériques sont des pertes de données ou des erreurs de transmission, qui peuvent être provoquées également par la réduction temporaire de la largeur de bande disponible, **caractérisé**
a) **en ce que** plusieurs images de la série temporelle, qui ne peuvent pas être décodées ou sinon d'une manière non satisfaisante, sont remplacées du côté du récepteur (R) ou sur le chemin de transmission (TC) vers un récepteur (R) par une série de plusieurs images de synthèse (P) qui sont sélectionnées à l'aide de données sonores (LD) à partir d'une bibliothèque (L) d'images de synthèse (P) de l'au moins un locuteur,
b) dans lequel, on entend par bibliothèque (L) d'images de synthèse (P) une pluralité d'images de synthèse (P) qui sont stockées dans un dispositif (PG) de stockage de données d'images numériques (I),
c) dans lequel entre des images (P) d'une telle bibliothèque (L) et de possibles sons, qui peuvent être extraits par une extraction de données sonores (LDE) à partir des données vocales (SD) d'un locuteur, existe une association à l'aide de laquelle au moins une image de synthèse (P) adaptée à un son (LD) peut être déterminée dans la bibliothèque (L), et
d) dans lequel les données sonores (LD) sont extraites par une reconnaissance de sons à partir de données vocales numériques (SD) du locuteur et les données vocales numériques sont transmises conjointement avec les données d'images numériques (I),
e) **en ce que**, ensuite, lorsque désormais survient une perturbation de la transmission en particulier par une réduction temporaire du débit de données disponible ou de la largeur de bande, les ou certaines images de la série d'images (I) sont remplacées par des images de synthèse (P), pour cela à la sortie du récepteur (R) est prévu un mélangeur (M) dans le récepteur (R) qui, à la place de la série d'images d'origine (I) délivre une série d'images mélangée (P, I) dans laquelle des images isolées ou plusieurs images des images d'origine (I) sont remplacées par des images de synthèse (P), dans lequel les données vocales sont délivrées de préférence non modifiées, et
f) **en ce que** les images d'une telle bibliothèque sont générées dans une première phase de la transmission des données vidéo par un dispositif (PG) de génération d'images de synthèse (P) et stockées dans la bibliothèque (L) afin, dans le cas d'une perturbation lors de la transmission d'une série temporelle d'images numériques, d'être sélectionnées dans une seconde phase de la transmission des données vidéo (I) par un dispositif (PG) de sélection d'images de synthèse (P) en fonction des données sonores extraites (LD) et d'être transmises à la place des images d'origine (I).

2. Procédé selon la revendication 1, **caractérisé en ce que** la perturbation de la transmission est ou a été provoquée par une réduction temporaire du débit de données disponible.

3. Procédé selon l'une quelconque des revendications précédentes, **caractérisé en ce que** la série de plusieurs images de synthèse (P) est ou a été générée du côté du récepteur (R).

4. Procédé selon l'une quelconque des revendications précédentes, **caractérisé en ce que** la série de plusieurs images de synthèse (P) est générée pendant la transmission.

5. Procédé selon l'une quelconque des revendications précédentes, **caractérisé en ce que** des données sonores (LD) sont extraites des données vocales (SD) du côté du récepteur (R) durant la transmission.

6. Procédé selon l'une quelconque des revendications précédentes, **caractérisé en ce que**, du côté du récepteur (R), la bibliothèque (L) d'images de synthèse (P) de l'au moins un locuteur est ou a été créée pendant ou avant la transmission des données vidéo.

7. Procédé selon l'une quelconque des revendications précédentes, **caractérisé en ce que** les images de synthèse (P) sont ou ont été générées sur le chemin de transmission (TC) entre l'émetteur (S) et un récepteur (R).

8. Procédé selon l'une quelconque des revendications précédentes, **caractérisé**
**en ce que** des données sonores (LD) sont extraites des données vocales (SD) sur le chemin de transmission entre l'émetteur et un récepteur durant la transmission.

9. Procédé selon l'une quelconque des revendications précédentes, **caractérisé**
**en ce qu'**une bibliothèque d'images de synthèse d'au moins un locuteur est ou a été créée sur le chemin de transmission entre l'émetteur et un récepteur.

10. Dispositif de communication avec des moyens pour l'exécution d'un procédé selon l'une quelconque des revendications précédentes.

11. Dispositif de communication selon la revendication 10 avec des moyens (LDE) pour l'extraction de données sonores (LD) à partir de données vocales (SD).

12. Dispositif de communication selon la revendication 11 avec des moyens (PG) pour la génération d'images de synthèse (P) à partir de données sonores (LD) et à partir de données d'images numériques (I) à transmettre ou à recevoir.
